# EUROPÄISCHE PATENTSCHRIFT

(11) **EP 2 397 512 B1**
(45) Veröffentlichungstag und Bekanntmachung des Hinweises auf die Patenterteilung: **08.07.2015**
(21) Anmeldenummer: 11169967.4
(22) Anmeldetag: 15.06.2011
(51) Int. Cl.: C08J 7/12, C23C 18/18

(54) **Kunststoffteil zur Verwendung im Innenraum eines Kraftfahrzeuges**
Plastic section for use in the interior of a motor vehicle
Pièces en matière plastique mises en oeuvre à l'intérieur d'un véhicule automobile

(30) Priorität: 17.06.2010 DE 202010005663 U
(43) Veröffentlichungstag der Anmeldung: 21.12.2011
(73) Patentinhaber: Dr. Schneider Kunststoffwerke GmbH, 96317 Kronach (DE)
(72) Erfinder: Wötting, Ulrich, 95032 Hof (DE); Koch, Rolf, 98724 Lauscha (DE)
(74) Vertreter: Pröll, Jürgen

(56) Entgegenhaltungen:
- US-B1- 6 696 173
- US-B2- 7 060 421
- BASF: "Ultramid T 4381 LDS", , März 2007 (2007-03), XP002661629, Gefunden im Internet: URL:http://www.plasticsportal.net/wa/plast icsEU~de_DE/function/conversions:/publish/ common/upload/application_examples/ultrami d_injection/Ultramid_t_4381_lds_3d_mid.pdf
- Ian deSouza: "First plastic chip antenna developed with BASF's laser-structurable polyamide.", , 22. April 2008 (2008-04-22), XP002661630, Gefunden im Internet: URL:http://www.plasticsportalasia.net/wa/p lasticsAP~zh_CN/portal/show/content/plasti csportal_news/2008/08_422a?doc_lang=en_GB

## Beschreibung

Die Erfindung betrifft ein Kunststoffteil zur Verwendung im Innenraum eines Kraftfahrzeuges, das mindestens partiell an der Oberfläche galvanisierbar ist.

Ein Kunststoffteil der gattungsgemäßen Art ist in Form einer Lamelle aus der EP 2 009 362 A2 bekannt. Die Lamelle weist zumindest abschnittsweise eine ausgebildete Umhüllung aus einem galvanisierbaren Kunststoff auf, auf den eine Galvanisierungsschicht und darauf ein Metallüberzug oder eine Lackschicht aufgebracht ist.

Aus der DE 20 2007 017 701 U1 ist eine Lamelle einer Lüftungsdüse, insbesondere im Kraftfahrzeugbereich bekannt, welche als Mehrkomponentenspritzgussteil aus Kunststoff besteht. Eine erste Komponente bildet im Wesentlichen eine erste Seite der Lamelle und besteht aus einem ersten verstärkten Kunststoff, welcher nicht metallisierbar ist. Eine zweite Komponente bildet im Wesentlichen eine der ersten Seite gegenüberliegende zweite Seite der Lamelle und besteht aus einem zweiten Kunststoff, welcher an die erste Komponente in definierter Weise anspritzbar und metallisierbar ist. Die erste Komponente kann ein Polycarbonat-Kunststoff sein, die zweite ein Acrylnitril-Butadien-Styrol-Kunststoff (ABS). Die Schwenklagerzapfen sind entweder umspritzt oder aus Metall ausgeführt. Durch den einseitigen Verbund ist unter Umständen ein Bi-Metall-Effekt gegeben, da die beiden Schichten unterschiedliche Dehnungskoeffizienten aufweisen, so dass eine Durchbiegung der Lamelle nicht auszuschließen ist. Auch können sich die beiden aneinander liegenden Kunststoffschichten voneinander lösen, wenn sie nicht durch Diffusion miteinander unmittelbar verbunden sind oder die Diffusionstiefe so gering ist, dass durch den unterschiedlichen Dehnungsfaktor die Verbindung sich auflösen kann.

Aus der DE 20 2007 008 676 U1 ist eine gestreckte Flachbaugruppe für Fahrzeuge, insbesondere eine Lamelle aus Kunststoff mit An- und Ausformungen zum Verbinden mit anderen Bauelementen oder zur Lagerung an oder zur Befestigung von Bauteilen bekannt, die aus mit kurzen Fasern versetztem Polyarylamid besteht. Die Fasern sind Kohlenstofffasern, Metallfaserabschnitte oder Fasern aus Kunststoff mit aufgerauter Oberfläche.

Aus der DE 10 2004 006 461 U1 ist eine Lamelle für eine Düse in einem Kraftfahrzeug bekannt, die aus Kunststoff besteht. Mittig weist die Lamelle ein Schiebeelement auf, das aus zwei Hälften zusammengesetzt ist und rückseitig ein Kraftübertragungselement in Form einer Gabel aufweist, über das eine Antriebseinrichtung oder eine Steuerlamelle, die senkrecht zur Lamelle im Düsengehäuse angeordnet ist, betätigt werden kann. Der Verschiebeweg des Schiebeelements ist durch Anschläge begrenzt, die aus der Fläche oder an der vorderen Stirnseite der Lamelle vorstehen und gegen die inneren Anschlagsflächen des Schiebeelements greifen. Zwischen den beiden Ansätzen ist eine Vertiefung vorgesehen, in der ein Wälzelement zur Dämpfung der Verschiebebewegung angeordnet ist.

Aus der DE 203 07 030 U1, der DE 37 19 837 C1, DE 101 32 186 A1, DE 203 16 176 U1 und aus der DE 201 18 014 U1 sind ebenfalls Lamellen mit Schiebeelementen bekannt. In der zuletzt genannten Schrift ist das Schiebeelement lichtdurchflutet ausgeführt. In dem Schiebeelement befindet sich dabei eine Lichtquelle, die über auf der aus Kunststoff bestehenden Lamelle angebrachten Stromschienen mit Strom versorgt wird. Die Stromschienen sind entweder aufgedampft, aufgeklebt oder bestehen aus leitfähigem Kunststoff, der in Längsnuten eingebracht ist.

Aus BASF: "Ultramid T 4381 LDS", März 2007, veröffentlicht auf der Internetseite http://www.plasticsportal.net/wa/plasticsEU∼de_DE/function/con versions:/publish/common/upload/application_examples/ultramid_ injection/Ultramid_t_4381_Ids_3d_mid.pdf ist bekannt, dass der Automobilzulieferer Kromberg und Schubert ein 3D-MID-Elektronikbauteil aus einem laserstrukturierbarem Polyamid der Firma BASF, Produktbezeichnung Ultramid T 4381 LDS, hergestellt hat. Leiterbahnen sind dadurch direkt in die Oberfläche dreidimensionaler Schaltungsträger integrierbar. Das teilkristaline, teilaromatische Hochtemperaturpolyamid ist mit 10 % Glasfasern und 25 % materialischen Füllstoffen verstärkt und bietet ein deutlich erweitertes Prozessfenster für die Metallisierung ohne Einbußen bei den mechanischen Eigenschaften.

Ferner ist in der DE 20 2008 008 877 U1 eine verschwenkbar gelagerte Lamelle in einer Lamellenanordnung in einem Gehäuse einer Luftdüse offenbart.

Aus der DE 20 2007 008 947 U1 ist eine weitere Lamelle für eine Luftdüse bekannt. Diese Lamelle ist als Verbundbauteil aus einer Tragstruktur und zumindest einer die Tragstruktur zumindest abschnittweise umgebenden Umhüllung hergestellt. Die Tragstruktur besteht aus einem nicht galvanisierbaren Kunststoff und die zumindest eine, wenigstens abschnittsweise ausgebildete Umhüllung aus einem galvanisierbaren Kunststoff.

Aus der EP 1 191 127 B1 ist ein Verfahren zur selektiven Metallisierung von dielektrischen Materialien bekannt. Hierbei wird eine Aktivierungsschicht aus leitendem Material auf das Dielektrikum aufgebracht, die anschließend durch eine Laserbehandlung strukturiert wird, wodurch ein Verbund aus diskret leitenden Strukturen entsteht, der anschließend elektrolytisch metallisiert werden kann.

Wenn eine Lamelle in einer Luftdüse aus Kunststoff eine größere Länge bzw. bei vertikaler Anordnung eine größere Höhe aufweist und ein relativ kleines Schiebelement oder ein anderes Betätigungselement, z. B. ein Drehsteller, aufgebracht ist, treten bei deren Betätigung erhöhte mechanische Belastungen auf, die zum Durchbiegen der Lamelle führen können. Dies kann insbesondere bei mehrjährigem Gebrauch und bei hoher Temperatur der durchströmenden Luft dazu führen, dass die Durchbiegung sich nicht mehr zurückstellt und damit die Betätigung der Einstellelemente schwerer wird. Ferner können bei jalousieartiger Anordnung von Lamellen uneinheitliche Luftspalten zwischen den einzelnen Lamellen durch die Eigenverformung der Lamellen auftreten. Es hat sich ferner gezeigt, dass auch bei mechanisch relativ unbelasteten Lamellen solche Verbiegungen, insbesondere dann, wenn sie horizontal angeordnet sind und bei längerem Gebrauch ständig von erwärmter Luft durchströmt werden, eintreten können, insbesondere dann, wenn die Lamellen sehr dünn ausgeführt sind.

Um das Durchbiegen zu vermeiden, ist es aus der EP 1 835 237 B1 bekannt, ein metallisches Einlegeteil vorzusehen, das sich im Wesentlichen über die gesamte Länge der Lamelle erstreckt und in Kunststoff eingebettet ist und mit einem Längsstreifen rückseitig aus dem Kunststoff vorsteht oder von dem Kunststoff vollständig umgeben ist. Im Falle des vorstehenden Streifens kann dieser als Stromschiene genutzt werden.

Aus der DE 20 2008 008 822 U1 ist ein dreh- oder verschiebbar gelagertes, hinterleuchtbares Bedienelement aus Kunststoff mit Mitteln zur mechanischen Kraftübertragung oder mit Mitteln für elektrische Steuerungen bekannt, das aus einem Kernelement aus transluzentem, nicht galvanisierbarem Kunststoff besteht. Dieser Kern ist von einem Mantelelement mindestens an der oder den sichtbaren Seiten umgeben. Das Mantelelement ist auf das Kernelement aufgespritzt und besteht aus galvanisierbarem Kunststoff, wobei Zonen für die Aufnahme von Durchleuchtungsteilen des Kernelements freigehalten sind. Auf das Mantelelement ist mindestens an der zugänglichen Oberfläche ein haptisches Element aus nicht galvanisierbarem Weichkunststoff derart aufgebracht, dass galvanisierbare Zonen am Mantelelement hervortreten und die durchleuchteten Teile sichtbar sind.

Ausgehend vom vorgenannten Stand der Technik liegt der Erfindung die Aufgabe zugrunde, ein Kunststoffteil zur Verwendung im Innenraum eines Kraftfahrzeuges aufzuzeigen, das mindestens partiell an der Oberfläche auch fein strukturiert galvanisierbar ist. Das erfindungsgemäße Kunststoffteil soll wirtschaftlich herstellbar und eine Metallisierung, insbesondere Galvanisierung, an Teilen, vorzugsweise der Oberfläche des Kunststoffteils ermöglichen, ohne dass die Lagerzapfen bei der Galvanisierung speziell abgeklebt oder behandelt werden müssen. Außerdem sollen besondere Erscheinungsbilder kostengünstig herstellbar sein.

Die Aufgabe löst die Erfindung durch Ausgestaltung der Lamelle gemäß der im Anspruch 1 angegebenen technischen Lehre, wonach das Kunststoffteil aus einem thermoplastischen Kunststoff besteht, der zusätzlich zumindest partiell mit einem Additiv aus einem laserspaltbaren Metallkomplex ausgestattet ist, und in die Oberfläche des Kunststoffteils mittels eines Laserstrahls mindestens partiell mindestens eine Struktur einbringbar ist. Vorteilhafte Weiterbildungen der Erfindung sind in den Unteransprüchen angegeben.

Das erfindungsgemäße Kunststoffteil dient zur Verwendung im Innenraum eines Kraftfahrzeuges und ist mindestens partiell an der Oberfläche galvanisierbar. Das Kunststoffteil kann aus
- Polyester (PE),
- Polyamid (PA),
- linear- oder teilaromatisiertem Polyamid (PA),
- Liquid Crystalline Polymer (LCP),
- Polycarbonat (PC),
- Acrylnitril-Butadien-Styrol (ABS),
- Polybutylenterephthalat (PBT),
- Polyethylenterephthalat; gesättigter Polyester (PET),
- Polyethylennaphthalat (PEN),
- Acryl-Butadien-Styrol-Copolymere (ABS),
- Polymer (PLA),
- Polymethylmethacrylat (PMMA),
- Polyetheretherketon (PEEK),
- Polyvinylchlorid (PVC) oder
- Polyphthalamid (PPA)
bestehen, das zusätzlich zumindest partiell mit dem Additiv aus einem laserspaltbaren Metallkomplex ausgestattet ist.

Die partiell galvanisierbare Oberfläche wird mittels eines Laserstrahls in der Oberfläche des Kunststoffteils erzeugt. Mittels eines Laserstrahls ist mindestens partiell mindestens eine Struktur in die Oberfläche des Kunststoffteils einbringbar. Das Additiv besteht aus einem laserspaltbaren Metallkomplex. Das Additiv ist nicht elektrisch leitfähig; es ist ein Dielektrikum. Es verändert daher die elektrischen Eigenschaften, insbesondere die elektrischen Isolationseigenschaften des Kunststoffes, in das es eingebracht ist, nicht. Es bleibt bei den üblichen Verarbeitungstemperaturen stabil. Erst bei Einwirkung eines Laserstrahls wird das Additiv in elementares Metall und Restgruppen aufgespalten. Der Laserstrahl ist vorzugsweise ein Infrarot-Laserstrahl, erzeugt von einem Infrarot-Laser. Es hat sich als besonders vorteilhaft erwiesen, einen Infrarot-Laser mit einer Wellenlänge von etwa 1064 Nanometer zu verwenden.

In einer vorteilhaften Ausgestaltung der Erfindung ist vorgesehen, dass die mittels des Laserstrahls in die Oberfläche des Kunststoffteils mindestens partiell einbringbare Struktur eine galvanisierbare Struktur ist, so dass diese optisch absetzbar oder auch elektrisch leitend ausführbar ist.

Es ist vorgesehen, dass das Kunststoffteil ein Kunststoffdekorteil oder ein Funktionsteil oder ein Betätigungselement an einem Funktionsteil ist. Ein Kunststoffdekorteil kann ein Flächenelement sein, beispielsweise eine Behältnis- oder Lochabdeckung in einem Armaturenbrett eines Kraftfahrzeugs. Das Kunststoffteil kann aber auch ein Funktionsteil sein, beispielsweise eine Lamelle, wie sie anhand des eingangs beschriebenen Standes der Technik bekannt ist, um darüber den Luftstrom aus einer Düse ablenken zu können. Das Kunststoffteil, das erfindungsgemäß ausgestaltet ist, kann aber auch ein Betätigungselement sein, das beispielsweise als Schiebeelement im Armaturenbrett vorgesehen ist oder als Schiebeelement an einem Funktionsteil direkt befestigt ist. Ein solches Betätigungselement ist beispielsweise auch das Schiebeelement einer Steuerlamelle in einer Düse, um hierüber Vertikallamellen zusätzlich zu den Horizontallamellen verstellen zu können. Gerade bei solchen Betätigungselementen ist es gewünscht, fein strukturierte Konturen vorzusehen, um beispielsweise Betätigungsrichtungen und Hinterleuchtungen einbringen zu können. Für solche Elemente ist die erfindungsgemäße Ausgestaltung von Vorteil, da z. B. eine strukturierte Umrahmung beispielsweise eingebracht werden kann, die nachträglich galvanisiert wird, so dass diese sich in Form eines dünnen metallischen Streifens optisch abzusetzen vermag.

Es hat sich gezeigt, dass ein Laserstrahl, generiert von einem Infrarotlaser und mit definierter Wellenlänge, für die Bearbeitung von fast allen Kunststoffen mit laserspaltbarem Metallkomplex einsetzbar ist, um die gewünschten Strukturen einbringen zu können. Hinzu kommt, dass solche Laser handelsüblich und preiswert im Markt erhältlich sind und somit in einem CNC-geführten Kopf zur Einbringung der gewünschten Struktur in das Kunststoffteil einsetzbar sind.

In einer Ausgestaltung ist eine verschwenkbar gelagerte Lamelle in einer Lamellenanordnung in einem Gehäuse einer Luftdüse mit einer vorderen Luftaustrittsöffnung und einem rückseitigen oder seitlichen Anschluss an einem Luftzuführschacht vorgesehen, wobei die Lamelle aus den schmalen Seitenflächen vorstehende, eine Schwenkachse bildende Lagerzapfen und einen Kern aus einem nicht galvanisierbaren Kunststoff aufweist, an dem die Lagerzapfen aus gleichem Material angeformt sind, und auf dem Kern mindestens partiell eine Umhüllungsschicht aufgebracht ist. Auch in eine solche Lamelle können gewünschte Strukturen eingebracht sein, z. B. auch Stromleiter für ein eingesetztes oder aufgesetztes Schiebeelement mit LED-Beleuchtung.

In einer anderen Ausgestaltung der Erfindung ist vorgesehen, dass das Kunststoffteil eine Lamelle oder ein Grundkörper zur Aufnahme einer Lamelle ist oder dass das Kunststoffteil eine Lamelle einer Luftdüse oder ein Grundkörper zur Aufnahme einer Lamelle im oder am Armaturenbrett eines Kraftfahrzeuges ist.

Eine andere Weiterbildung der Erfindung sieht vor, dass in mindestens eine Außenseite des Kunststoffteils zumindest partiell mit dem Infrarotlaser definierter Wellenlänge zu galvanisierende gewünschte Strukturen einarbeitbar sind und diese durch den Laserstrahl freigelegten Strukturen in einem elektrochemischen oder chemischen Galvanisationsbad metallisiert oder galvanisiert werden.

Bei den mittels Infrarotlaser eingebrachten Strukturen kann es sich um Symbole, Zahlen, Ziffern, Rahmenkonturen oder Striche handeln. Diese eingebrachten Strukturen können zumindest partiell durch eine Reflektionsbeleuchtung oder eine andere Hinterleuchtung ausgeleuchtet werden.

Auch ist es nach einer Ausgestaltung der Erfindung möglich, in das Kunststoffteil mittels des Laserstrahls Leiterbahnen zum Anschluss elektrischer Stromführungskomponenten einzubringen.

In einer weiteren vorteilhaften Ausgestaltung der Erfindung ist vorgesehen, dass mittels des Laserstrahls aus der Oberfläche des Kunststoffteils die Kunststoffschicht geringfügig abgetragen wird und zugleich eine ausreichende Anzahl von Additivbestandteilen gespalten werden, so dass der Laserstrahl in der Oberfläche des Kunststoffteils eine Mikrorauheit an diesen Stellen mit eingelagerten Metallatomen erzeugt, an welchen im nachfolgenden Metallisierungsprozess die spätere Metallisierung anhaftet.

Um die Griffigkeit eines Kunststoffteils, insbesondere eines Funktionsteils oder eines Betätigungselements, zu erhalten, ist in einer Weiterbildung der Erfindung vorgesehen, dass das Kunststoffteil zumindest stellenweise mit einer nicht galvanisierbaren Weichkunststoffschicht versehen ist, die keinen Metallkomplex aufweist.

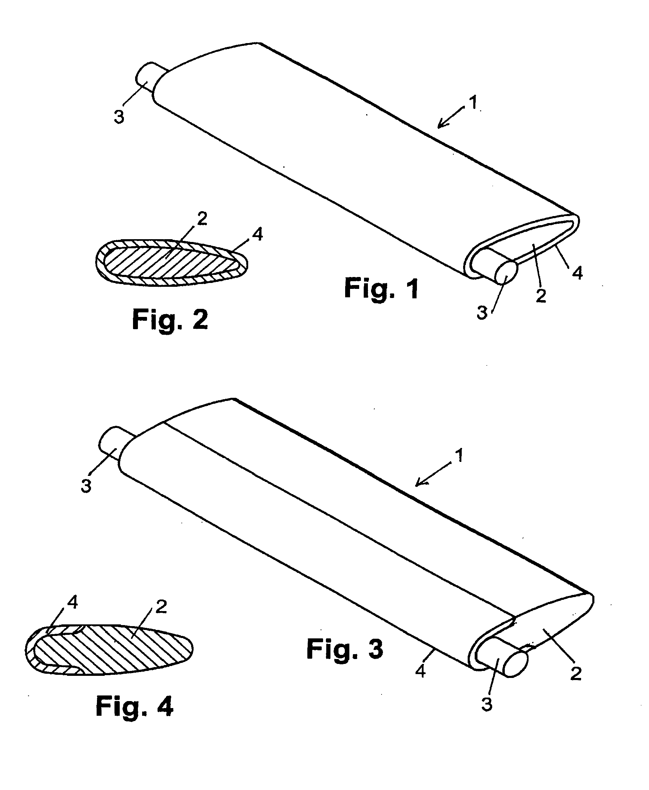

Im Nachfolgenden wird die Erfindung anhand der in den Figuren FIG 1 bis FIG 6 dargestellten Ausführungsbeispiele näher beschrieben. Diese Beschreibung der konkreten Ausführungsbeispiele stellt keine Limitierung der Erfindung auf eines dieser konkreten Ausführungsbeispiele dar.

In den Zeichnungen zeigen:
- FIG 1: ein Kunststoffteil in der Ausführung als Kunststoffdekorteil in Form einer Lamelle in vereinfachter Darstellung,
- FIG 2: einen Querschnitt durch die Lamelle nach FIG 1,
- FIG 3: eine Ausführungsvariante der Lamelle nach FIG 1,
- FIG 4: einen Querschnitt durch die Lamelle nach FIG 3,
- FIG 5: ein weiteres Beispiel einer Lamelle nach der Erfindung in vereinfachter perspektivischer Darstellung und
- FIG 6: einen Querschnitt durch die Lamelle nach FIG 5.

Bei der nachfolgenden Figurenbeschreibung wird figurenübergreifend für identische Elemente in den Figuren jeweils dasselbe Bezugszeichen verwendet. Dies dient der Übersichtlichkeit und besseren Verständlichkeit der weiteren konkreten Beschreibung der Erfindung anhand der Figuren FIG 1 bis FIG 6.

In FIG 1 ist ein Kunststoffteil in der Ausführung als Kunststoffdekorteil in Form einer Lamelle 1 in vereinfachter Darstellung aufgezeigt. In FIG 2 ist ein Schnitt durch die Lamelle 1 nach FIG 1 dargestellt. Die Lamelle 1 besteht aus einem Kern 2 aus einem nicht galvanisierbaren Kunststoff, an dem Lagerzapfen 3, die an den Stirnseiten vorstehen, angeformt sind, so dass diese auch bei Einhängen der Lamelle 1 in ein galvanisches Beschichtungsbad nicht metallisiert werden können. Auf dem Kern 2 ist mindestens im sichtbaren Bereich, also in dem Bereich, der in der Regel vor der Schwenkachse liegt, eine Umhüllungsschicht 4 aufgebracht. Die Umhüllungsschicht 4 ist mit einem Additiv aus einem laserspaltbaren Metallkomplex versehen. Die Umhüllungsschicht 4 ist in vorteilhafter Ausgestaltung der Erfindung lediglich partiell mit dem Additiv versehen. In einer alternativen Ausgestaltung der Erfindung ist die Umhüllungsschicht 4 nicht vorhanden und der Kunststoff des Kerns 2 ist zumindest partiell mit dem Additiv versehen. Das Additiv besteht aus einem laserspaltbaren Metallkomplex. Das Additiv ist nicht elektrisch leitfähig; es ist ein Dielektrikum. Es verändert daher die elektrischen Eigenschaften, insbesondere die elektrischen Isolationseigenschaften des Kunststoffes, in das es eingebracht ist, nicht. Es bleibt bei den üblichen Verarbeitungstemperaturen stabil. Erst bei Einwirkung eines Laserstrahls wird das Additiv in elementares Metall und Restgruppen aufgespalten. Der Laserstrahl ist vorzugsweise ein Infrarot-Laserstrahl, erzeugt von einem Infrarot-Laser. Es hat sich als besonders vorteilhaft erwiesen, einen Infrarot-Laser mit einer Wellenlänge von etwa 1064 Nanometer zu verwenden.

Durch die Einbringung des Additivs in die Umhüllungsschicht 4 können beliebige Formen umhüllt werden. Bei Einbringung in ein beliebiges Kunststoffgranulat kann mit dem Granulat im bekannten Spritzgießverfahren nahezu jede beliebige Form erstellt werden. Es wird dann, nach der Herstellung des Kunststoffteiles - im vorliegenden Fall der Lamelle 1 - die Oberfläche der Lamelle 1 an der Stelle und/oder den Stellen, an welcher oder welchen im nachfolgenden Bearbeitungsschritt eine Galvanisierung erfolgen soll, mit dem Laser Strukturen eingebrannt. Es wird somit quasi die zu galvanisierende Struktur in die dreidimensionale Oberfläche der Lamelle 1 eingebracht, analog zu einer Gravur. Der Laser ist hierbei so zu justieren, dass das Polymer nur geringfügig abgetragen wird und zugleich ausreichend Additivbestandteile gespalten werden. Es entsteht mittels des Lasers eine definierte und mittels der Steuerung des Lasers eine definierbare Mikrorauheit der Oberfläche mit eingelagerten Metallatomen, die dafür verantwortlich sind, dass bei dem späteren Galvanisierungsprozess das aufgalvanisierte Metall, vorzugsweise Chrom, Kupfer, Nickel, Silber, Gold, usw. haftfest mit der Lamelle 1 verankert ist.

Mittels eines Laserstrahls, der in FIG 1 nicht dargestellt ist, kann in die Oberfläche der Lamelle 1 eine Struktur eingebracht werden. Der Laserstrahl, der über die Oberfläche der Lamelle 1 im Bereich der Umhüllungsschicht 4, die an dieser Stelle das Additiv als Bestandteil aufweist, geführt wird, spaltet das Additiv auf und hinterlässt eine Struktur mit angeordneten und fest mit der Lamelle 1 verbundenen Metallatomen, an welchen in einem nachfolgenden Galvanisierungsschritt das aufzubringende Metall anhaftet und sich fest mit der Lamelle 1 verbindet.

Auf diesen Kunststoff kann dann nach vorheriger partieller Behandlung mittels des Laserstrahls partiell eine Metallschicht im Galvanikbad aufgebracht werden, wodurch gewünschte optische Effekte erzielbar sind. Es kann aber auch die Galvanikschicht durchgehend z.B. als Stromschiene aufgebracht sein, so dass ein darauf aufsetzbarer Reiter von einer eingebetteten Lichtquelle hinterleuchtet werden kann. Ebenso können sich in einem solchen Schiebeelement Kontakte befinden, die geschlossen werden, wenn der Schieber von einem Finger berührt wird, so dass über die Stromschiene in gewünschter Weise ein Strom fließt und damit beispielsweise elektrisch eine Verschließklappe der Düse betätigt werden kann. Die Möglichkeit der Aufbringung einer Metallschicht ist mithin nicht nur aus optischen Gründen, sondern auch dann gewünscht, wenn diese Schichten als Stromführungsschichten verwendet werden sollen.

Der Kern 2 besteht vorzugsweise aus einem nicht galvanisierbaren Kunststoff. Vorzugsweise ist dieser Kunststoff mit Kohlenstofffasern, Metallfadenabschnitten oder Fasern aus Kunststoff oder mit Glasfaserabschnitten verstärkt. Dadurch wird ein stabiler Aufbau der Lamelle 1 erzielt. Die Umhüllungsschicht 4 aus dem nicht galvanisierbaren Kunststoff mit dem Additiv kann dann extrem dünn aufgebracht werden. Diese Schicht wirkt zwar verstärkend, die eigentliche Durchbiegungsfestigkeit und Steifigkeit der Lamelle 1 wird aber durch den Kern 2 selbst bestimmt.

Um eine Geräuschdämmung bei der Durchströmung der Luft durch eine Düsenanordnung mit einer Vielzahl von Lamellen zu erreichen, ist in weiterer Ausgestaltung der Erfindung vorgesehen, dass jene Teile der Umhüllungsschicht, die nicht galvanisiert werden sollen, mit einer Weichkunststoffschicht überzogen sind. Hierfür eignet sich beispielsweise ein thermoplastisches Elastomer auf der Basis von SEBS/PP (Polystyrolpoly(ethylen/ butylen)-polystyrol / Polypropylen) mit einem Seitenkettenanteil von über 60%. Weitere geeignete Kunststoffe zur Bildung des Kerns und der Umhüllungsschicht sind aus der WO 2008/017423 für andere Zwecke bekannt. Die Weichkunststoffschicht kann dabei auch aus galvanisierbarem Material bestehen, so dass auch diese Oberfläche galvanisiert werden kann. Die Weichkunststoffschicht kann ergänzend zu einer die Oberfläche im Wesentlichen prägenden Umhüllungsschicht 4 partiell auf den Kern 2 mit aufgebracht werden, um die Geräuschdämmung bzw. die gewünschte zusätzliche Verwirbelung des Luftstromes zu erzielen. Die Weichkunststoffschicht kann auch wulstförmig an der vorderen Kante oder Kanäle bildend an der Oberfläche angespritzt sein.

Der Kern 2 kann zur weiteren Erhöhung der Durchbiegungsstabilität mit einem metallischen Einlegeteil versehen sein. Dieser Einlegeteil kann beispielsweise auch in den Kern 2 eingespritzt sein. Der Kern 2 selbst kann eine glatte, gerippte oder geprägte Oberfläche aufweisen oder in einer Rippen- oder Prägestruktur ausgeführt sein. Er kann aber auch Löcher aufweisen, damit die Umhüllungsschicht 4, die bei der Herstellung nach dem Zweikomponenten-Spritzgießverfahren in einer zweiten Kavität des Werkzeuges aufgebracht wird, fest an dem Kern 2 haftet bzw. sich mit diesem form- und stoffschlüssig verbindet und eine Einheit bildet. Die Rippen und Prägungen oder die Löcher bilden dabei die Voraussetzung, dass eine hohe Oberflächenbindung besteht.

Als Kernmaterial hat sich als besonders geeignet Polycarbonat erwiesen. Dieser Kunststoff lässt sich mit Glasfaserabschnitten oder mit Metallfasern oder mit Kohlenstofffaserabschnitten mischen, so dass durch diese Faserverstärkung eine erhöhte Durchbiegefestigkeit erzielt werden kann. Auch kann ein Polyarylamid (PAA) zur Herstellung des Kerns verwendet werden.

Es hat sich als besonders vorteilhaft erweisen für das Kunststoffteil und als Kernmaterial Polyamid, linear oder teilaromatisiert, oder Liquid Crystalline Polymer oder Polycarbonat oder Polycarbonat/Acrylnitril-Butadien-Styrol oder Polybutylenterephthalat zu verwenden. Zusätzlich ist der vorgenannte Kunststoff zusätzlich zumindest partiell mit einem Additiv aus einem laserspaltbaren Metallkomplex ausgestattet bzw. vermischt.

Die aufzubringende Umhüllungsschicht 4 besteht beispielsweise aus einer Hartkunststoffkomponente mit einer glatten Oberfläche, die dann in gewünschter Weise mit dem Additiv versetzt ist.

In einer besonderen Ausgestaltungsform ist vorgesehen, dass der Kern 2 aus einem transparenten, also lichtdurchlässigen oder lichtsammelnden Kunststoff besteht, so dass über den Lagerzapfen 3 Licht eingeleitet werden kann. In diesem Fall sind über die längere Stirnkante keine Galvanisierungen vorgesehen oder nur partiell vorgesehen, so dass das Licht austreten kann. Die Umhüllungsschicht 4 befindet sich dann oben- oder untenseitig bzw. bei senkrechter Anordnung der Lamelle 1 links und rechts. Hier können also Licht- und Metalleffekte miteinander auf einfache Weise kombiniert werden, ohne dass besondere Bearbeitungen notwendig sind, um beispielsweise die Lagerzapfen bei der Galvanisierung von einer Metallisierung auszuschließen.

Als Lichtquelle kann beispielsweise eine Leuchtdiode verwendet werden, die vor der Stirnseite des Lagerzapfens 3 platziert ist. Es kann aber auch eine Lichtleitfaser vor der Stirnseite des Lagerzapfens 3 bzw. der Lagerzapfen enden, die das Licht von einer entfernten Lichtquelle zuführt. Die Lichtquelle kann auch eine Glühlampe oder eine andere Kunstlichtlampe sein. Am besten eignet sich jedoch eine energiesparende Leuchtdiode oder mehrere Leuchtdioden, deren Licht gebündelt eingeleitet wird. Die hierfür verwendbaren Kunststoffe sind ebenfalls Polycarbonatkunststoffe, so genannte LISA-Kunststoffe.

Es hat sich herausgestellt, dass ein Durchbiegen des Kerns 2 auch vermieden werden kann, wenn ein pigmentierter Kunststoff verwendet wird. Die eingebrachten Farbstoffe versteifen den Kern 2. Wenn Pigmente in die Umhüllungsschicht eingebracht werden, fördert dies ebenfalls die Festigkeit der Lamelle 1. Außerdem sind hierdurch besondere optische Gestaltungen möglich.

Hergestellt wird eine Lamelle 1 nach der Erfindung in vorteilhafter Weise im Zwei- oder Drei-K-Verfahren, einem Kunststoffspritzverfahren, bei dem die Teile in einem Werkzeug von einer Kavität in die andere Kavität eingelegt und jeweils umspritzt werden. In einer weiteren Kavität kann auch die Weichkunststoffkomponente aus einem nicht galvanisierbaren Kunststoff auf die Umhüllung aufgebracht werden.

Die Lamelle 1 weist den Kern 2 auf, der beispielsweise eine bestimmte Oberflächenstruktur haben kann und vorzugsweise aus Polycarbonat gefertigt ist. An den Stirnseiten sind seitlich zwei Lagerzapfen 3 angespritzt. Diese Lagerzapfen 3 werden in Lagerausnehmungen im Gehäuse oder Rahmenteil einer Düse eingesetzt. Die Lamelle 1 ist schwenkbar gelagert. Die Mitnehmer, die ebenfalls stirnseitig vorstehen können, um eine Betätigungsstange einrasten zu können, sind der Einfachheit halber nicht dargestellt. Das verwendete Polycarbonat ist für eine galvanische Metallbeschichtung nicht geeignet. Auf die Lagerzapfen 3 an den Stirnseiten wird also in einem galvanischen Bad keine Metallschicht aufgetragen. Der Kunststoff kann durch Fasern verstärkt sein. Um die Mantelfläche herum ist eine Umhüllungsschicht 4 aufgebracht. Die Umhüllungsschicht 4 ist, wie beschrieben, mit dem Additiv aus einem laserspaltbaren Metallkomplex versehen. Das Additiv ist nicht elektrisch leitfähig; es ist ein Dielektrikum. Es verändert daher die elektrischen Eigenschaften, insbesondere die elektrischen Isolationseigenschaften, des Kunststoffes, in das es eingebracht ist, nicht. Es bleibt bei den üblichen Verarbeitungstemperaturen stabil. Erst bei Einwirkung eines Laserstrahls wird das Additiv in elementares Metall und Restgruppen aufgespalten.

FIG 3 und FIG 4 zeigen ein weiteres Ausführungsbeispiel, aus dem ersichtlich ist, dass die vordere Partie der Lamelle 1 mit einer Umhüllungsschicht 4 umgeben ist, die aus Kunststoff besteht, in welchem das Additiv eingebracht ist, während der Kern 2 den hinteren Teil vollständig bildet und beispielsweise aus glasfaserverstärktem Polycarbonat besteht. Auch hier ist durch die konstruktive Anordnung gewährleistet, dass sich die Lamelle nicht verziehen kann.

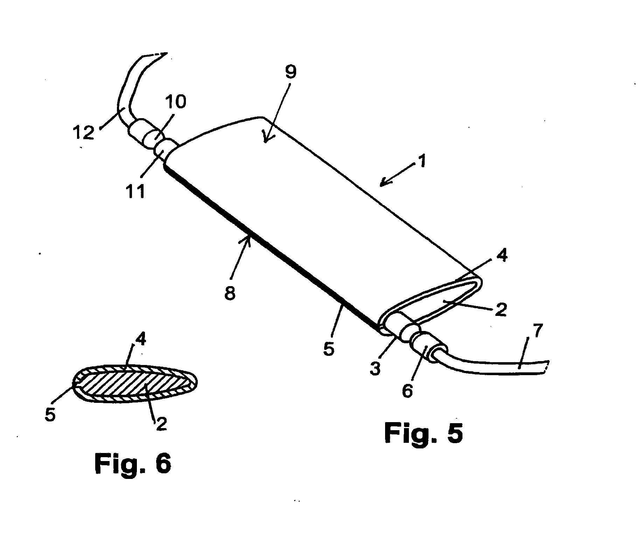

In FIG 5 und FIG 6 ist ein Ausführungsbeispiel dargestellt, bei dem die Lamelle 1 aus einem Kern 2 besteht, der beispielsweise aus einem lichtleitenden Material gefertigt ist. Dies kann ein lichtleitendes Polycarbonat sein, bei dem die Oberfläche eine Totalreflexion bietet. Der Kern 2 ist vollständig von der Umhüllungsschicht 4 mit dem Additiv umgeben. In die Oberfläche 9 der Umhüllungsschicht 4 wird nunmehr mittels des Laserstrahls 8 eine Struktur 5 eingebracht. Über den Lagerzapfen 3, der als Stecker ausgeführt ist, kann mittels eines Gegenstückes 6 über eine Stromleitung 7 elektrischer Strom der Lamelle 1 zugeführt werden. Ein in der Lamelle 1 angeordnetes Lichtelement, etwa eine LED, kann somit versorgt werden und den Kern 2 beleuchten. Der Laser 8 bringt die Struktur 5 in die Oberfläche 9 der Lamelle 1 ein. Durch das "Verdampfen" der Umhüllungsschicht 4 kann an der Struktur 5 das Licht aus dem Kern 2 geführt werden.

Alternativ ist vorgesehen, dass ein optisches Kopplungselement 10, 11 vorgesehen ist, über welches Licht, das von einem Lichtwellenleiter 12 geführt wird, in die Lamelle 1 einkoppelbar ist.

Die Oberfläche 9 kann nach der Behandlung mit dem Laser 8 galvanisiert werden. Es kann auf diese Weise dann die Struktur 5 galvanisiert werden.

### Bezugszeichenliste

- 1: Lamelle
- 2: Kern
- 3: Lagerzapfen
- 4: Umhüllungsschicht
- 5: Spalt
- 6: Leuchtdiode
- 7: Stromleitung
- 8: Laserstrahl
- 9: Oberfläche
- 10: Koppler
- 11: Gegenkoppler
- 12: Lichtwellenleiter

## Patentansprüche

1. Kunststoffteil (1), welches ein Kunststoffdekorteil oder ein Funktionsteil oder ein Betätigungselement an einem Funktionsteil ist und im Innenraum eines Kraftfahrzeuges angeordnet ist, wobei das Kunststoffteil (1) mindestens partiell an der Oberfläche (9) galvanisierbar ist, **dadurch gekennzeichnet, dass** das Kunststoffteil (1) aus einem thermoplastischen Kunststoff besteht, der zusätzlich zumindest partiell mit einem Additiv aus einem laserspaltbaren Metallkomplex ausgestattet ist, und dass in die Oberfläche des Kunststoffteils (1) mittels eines Laserstrahls (8) mindestens partiell mindestens eine Struktur (5) eingebracht ist und das Kunststoffteil (1) eine Lamelle oder ein Grundkörper zur Aufnahme einer Lamelle ist oder dass das Kunststoffteil (1) eine Lamelle einer Luftdüse oder ein Grundkörper zur Aufnahme einer Lamelle im oder am Armaturenbrett eines Kraftfahrzeuges ist.

2. Kunststoffteil (1) nach Anspruch 1, **dadurch gekennzeichnet, dass** die mittels des Laserstrahls (8) in die Oberfläche des Kunststoffteils (1) mindestens partiell einbringbare Struktur (5) eine galvanisierbare Struktur ist.

3. Kunststoffteil (1) nach Anspruch 1, **dadurch gekennzeichnet, dass** das Kunststoffteil (1) aus
- Polyester (PE),
- Polyamid (PA),
- linear- oder teilaromatisiertem Polyamid (PA),
- Liquid Crystalline Polymer (LCP),
- Polycarbonat (PC),
- Acrylnitril-Butadien-Styrol (ABS),
- Polybutylenterephthalat (PBT),
- Polyethylenterephthalat; gesättigter Polyester (PET),
- Polyethylennaphthalat (PEN),
- Acryl-Butadien-Styrol-Copolymere (ABS),
- Polymer (PLA),
- Polymethylmethacrylat (PMMA),
- Polyetheretherketon (PEEK),
- Polyvinylchlorid (PVC) oder
- Polyphthalamid (PPA)
besteht, das zusätzlich zumindest partiell mit dem Additiv aus einem laserspaltbaren Metallkomplex ausgestattet ist.

4. Kunststoffteil (1) nach einem der vorangehenden Ansprüche 1 bis 3, **dadurch gekennzeichnet, dass** der Laserstrahl (8) von einem Infrarotlaser stammt und eine definierte Wellenlänge aufweist.

5. Kunststoffteil (1) nach einem der vorangehenden Ansprüche 1 bis 4, **dadurch gekennzeichnet, dass** in mindestens eine Außenseite des Kunststoffteils (1) zumindest partiell mit dem Infrarotlaser eine galvanisierbare gewünschte Struktur eingearbeitet ist und diese durch den Laserstrahl (8) freigelegte Struktur (5) in einem elektrochemischen oder chemischen Galvanisationsbad metallisierbar oder galvanisierbar ist.

6. Kunststoffteil (1) nach einem der vorangehenden Ansprüche 1 bis 5, **dadurch gekennzeichnet, dass** die mit dem Infrarotlaser eingebrachten Strukturen (5) Symbole, Zahlen, Ziffern oder Rahmenstrukturen sind und zumindest partiell durch eine Reflektionsbeleuchtung ausleuchtbar sind.

7. Kunststoffteil (1) nach einem der vorangehenden Ansprüche 1 bis 6, **dadurch gekennzeichnet, dass** in das Kunststoffteil (1) mittels des Laserstrahls (8) Leiterbahnen zum Anschluss elektrischer Stromführungskomponenten einbringbar sind.

8. Kunststoffteil (1) nach einem der vorangehenden Ansprüche 1 bis 7, **dadurch gekennzeichnet, dass** der Laserstrahl (8) aus der Oberfläche (9) des Kunststoffteils (1) die Kunststoffschicht geringfügig abträgt und zugleich eine ausreichende Anzahl von Additivbestandteilen spaltet, so dass durch den Laserstrahl (8) in der Oberfläche (9) des Kunststoffteils (1) eine Mikrorauheit an diesen Stellen mit eingelagerten Metallatomen entsteht, an welchen im nachfolgenden Metallisierungsprozess die aufzubringende Metallschicht anhaftet.

9. Kunststoffteil (1) nach einem der vorangehenden Ansprüche, **dadurch gekennzeichnet, dass** das Kunststoffteil (1) zumindest stellenweise mit einer nicht galvanisierbaren Weichkunststoffschicht versehen ist.

## Claims

1. Plastics material part (1), which is a plastics material decorative part or a functional part or an actuating element at a functional part and is arranged in the interior space of a motor vehicle, wherein the plastics material part (1) can be at least partly galvanised at the surface (9), **characterised in that** the plastics material part (1) consists of a thermoplastic plastics material which is in addition at least partly furnished with an additive of a laser-divisible metal complex, and that at least partly at least one structure (5) is introduced into the surface of the plastics material part (1) by means of a laser beam (8) and the plastics material part (1) is a slat or a base body for mounting a slat or that the plastics material part (1) is a slat of an air nozzle or a base body for mounting a slat in or at the dashboard of a motor vehicle.

2. Plastics material part (1) according to claim 1, **characterised in that** the structure (5) at least partly introducible into the surface of the plastics material part (1) by means of the laser beam (8) is a galvanisable structure.

3. Plastics material part (1) according to claim 1, **characterised in that** the plastics material part (1) consists of
- polyester (PE),
- polyamide (PA),
- linearly or partly aromatised polyamide (PA),
- liquid crystalline polymer (LCP),
- polycarbonate (PC),
- acrylnitrile-butadiene-styrol (ABS),
- polybutylenetetraphthalate (PBT),
- polyethylenetetraphthalate; saturated polyester (PET),
- polyethylenenaphthalate (PEN),
- acryl-butadiene-styrol copolymers (ABS)
- polymer (PLA),
- polymethylmethacrylate (PMMA),
- polyetheretherketone (PEEK)
- polyvinylchloride (PVC) or
- polyphtalamide (PPA)
which is in addition at least partly provided with the additive of a laser-divisible metal complex.

4. Plastics material part (1) according to any one of the preceding claims 1 to 3, **characterised in that** the laser beam (8) derives from an infrared laser and has a defined wavelength.

5. Plastics material part (1) according to any one of the preceding claims 1 to 4, **characterised in that** a galvanisable desired structure is worked at least partly into at least one outer side of the plastics material part (1) by the infrared laser and this structure (5) exposed by the laser beam (8) is metallisable or galvanisable in an electrochemical or chemical galvanisation bath.

6. Plastics material part (1) according to any one of the preceding claims 1 to 5, **characterised in that** the structures (5) introduced by the infrared laser are symbols, numbers, numerals or frame structures and can be illuminated at least partly by reflection lighting.

7. Plastics material part (1) according to any one of the preceding claims 1 to 6, **characterised in that** conductor tracks for connection of electrical current conducting components are introducible into the plastics material part (1) by means of the laser beam (8).

8. Plastics material part (1) according to any one of the preceding claims 1 to 7, **characterised in that** the laser beam (8) slightly removes the plastics material layer from the surface (9) of the plastics material part (1) and at the same time divides a sufficient number of additive components so that through the laser beam (8) a micro-roughness arises in the surface (9) of the plastics material part (1) at those places with stored metal atoms, to which the metal layer to be applied adheres in the downstream metallisation process.

9. Plastics material part (1) according to any one of the preceding claims, **characterised in that** the plastics material part (1) is provided at least in places with a non-galvanisable soft plastics material layer.

## Revendications

1. Pièce en matière plastique (1) qui est un pièce décorative en matière plastique ou une pièce fonctionnelle ou un élément d'actionnement connecté à une pièce fonctionnelle et qui est située à l'intérieur d'un véhicule à moteur, la pièce en matière plastique (1) pouvant être galvanisée au moins partiellement sur la surface (9), caractérisée en cela que la pièce en matière plastique (1) est composée d'une matière plastique thermoplastique qui est équipé en plus, au moins partiellement, d'un additif fait d'un complexe métallique pouvant être divisé par un laser et en cela que dans la surface de la pièce en matière plastique (1) au moins une structure (5) est placée au moins partiellement par un rayon laser (8) et que la pièce en matière plastique (1) est une lamelle ou un corps de base servant à recevoir une lamelle ou en cela que la pièce en matière plastique (1) est une lamelle d'une buse à air ou un corps de base servant à recevoir une lamelle dans ou sur le tableau de bord d'un véhicule à moteur.

2. Pièce en matière plastique (1) selon la revendication 1 caractérisée en cela que la structure (5) pouvant être insérée au moins partiellement par un rayon laser (8) dans la surface de la pièce en matière plastique (1) est une structure galvanisable.

3. Pièce en plastique (1) selon la revendication 1 caractérisée en cela que la pièce en matière plastique (1) est composée de
- polyester (PE),
- polyamide (PA),
- polyamide linéaire ou partiellement aromatique (PA),
- Liquid Crystalline Polymer (LCP),
- polycarbonate (PC),
- acrylonitrile butadiène styrène (ABS),
- polytéréphtalate de butylène (PBT),
- polytéréphtalate d'éthylène ; polyester saturé (PET),
- polynaphtalate d'éthylène (PEN),
- copolymère d'acrylonitrile butadiène styrène (ABS),
- polymère (PLA),
- polyméthacrylate de méthyle (PMMA),
- polyétheréthercétone (PEEK),
- polychlorure de vinyle (PVC) ou
- polyphthalamide (PPA)
qui est équipée en plus, au moins partiellement, de l'additif d'un complexe métallique divisible au laser.

4. Pièce en matière plastique (1) selon l'une des revendications précédentes 1 à 3 caractérisée en cela que le rayon laser (8) émane d'un laser à infrarouge et présente une longueur d'ondes définie.

5. Pièce en matière plastique (1) selon l'une des revendications précédentes 1 à 4 caractérisée en cela que dans au moins une partie extérieure de la pièce en plastique (1) une structure galvanisable souhaitée est intégrée au moins partiellement avec le laser à infrarouge et que cette structure (5) libérée par le rayon laser (8) peut être métallisée ou galvanisée dans un bain de galvanisation électrochimique ou chimique.

6. Pièce en matière plastique (1) selon l'une des revendications précédentes 1 à 5 caractérisée en cela que les structures (5) intégrées avec le laser à infrarouge sont des symboles, des nombres, des chiffres ou des cadres et peuvent être éclairées au moins partiellement par un éclairage par réflexion.

7. Pièce en matière plastique (1) selon l'une des revendications précédentes 1 à 6 caractérisée en cela que dans la pièce en matière plastique (1) des conducteurs plats peuvent être intégrés à l'aide du rayon laser (8) pour connecter des composants électriques conducteurs de courant.

8. Pièce en matière plastique (1) selon l'une des revendications précédentes 1 à 7 caractérisée en cela que le rayon laser (8) peut usiner légèrement sur la surface (9) de la pièce en matière plastique (1) la couche de matière plastique et sépare simultanément un nombre suffisant de composants de l'additif si bien que par le rayon laser (8) dans la surface (9) de la pièce en matière plastique (1) une microrugosité est créée sur ces zones avec les atomes métalliques intégrés sur laquelle dans le processus de métallisation suivant la couche de métal à appliquer adhère.

9. Pièce en matière plastique (1) selon l'une des revendications précédentes caractérisée en cela que la pièce en matière plastique (1) est équipée au moins par endroits d'une couche de matière plastique souple non galvanisable.
